# EUROPÄISCHE PATENTSCHRIFT

(11) **EP 0 799 390 B1**
(45) Veröffentlichungstag und Bekanntmachung des Hinweises auf die Patenterteilung: **24.10.2001**
(21) Anmeldenummer: 95940949.1
(22) Anmeldetag: 12.12.1995
(51) Int. Cl.: F16D 67/04, F16D 65/853

(54) **EINRICHTUNG FÜR DEN ÖLRÜCKLAUF VON NASSLAUFKUPPLUNGEN UND -BREMSEN**
DEVICE FOR ENSURING THE RETURN FLOW OF OIL IN WET-RUNNING COUPLINGS AND BRAKES
DISPOSITIF DE RETOUR D'HUILE DANS DES ACCOUPLEMENTS ET FREINS A LUBRIFICATION CONSTANTE

(30) Priorität: 13.12.1994 DE 4447455
(43) Veröffentlichungstag der Anmeldung: 08.10.1997
(73) Patentinhaber: SMS Eumuco GmbH, 51377 Leverkusen (DE)
(72) Erfinder: KREISL, Joachim, D-51373 Leverkusen (DE); GOBER, Norbert, D-51519 Odenthal (DE)
(74) Vertreter: Valentin, Ekkehard, Dipl.-Ing.
(86) Internationale Anmeldenummer: DE9501777
(87) Internationale Veröffentlichungsnummer: WO9618831

(56) Entgegenhaltungen:
- GB-A- 1 502 608
- US-A- 3 730 301
- US-A- 4 046 235
- US-A- 4 074 663
- US-A- 4 142 619
- US-A- 4 491 202
- US-A- 4 633 986

## Beschreibung

Die Erfindung betrifft die Ausführung von Schaltelementen an Maschinen der Umformtechnik.

Bei den bekannten hydraulisch geschalteten und durch Kühl- und Schmieröl durchfluteten Schaltelementen (Kupplungen und Bremsen) ist der Ablauf des in die Kupplung und Bremse geführten Öles meistens der Wirkung der Schwerkraft des Öles überlassen. Es sind auch Lösungen bekannt, bei denen das rotierende Kupplungsgehäuse einen durch Fliehkräfte erzeugten Ölring innerhalb des Gehäuses aufbauen kann. Durch ein in diesen Ölring ragendes Schöpfrohr erfolgt der Ölablauf aus den Schaltelementen durch das Bremsgehäuse und die Lagerung (Hohlachse) (US-PS 4 633 986). Naturgemäß ist es ein Nachteil, daß für den Aufbau einer das Öl treibenden Fliehkraft eine Mindestdrehzahl erforderlich ist. Sie begrenzt diese Lösung auf Schaltelemente mit hohen Drehzahlen.

Des weiteren ist die Wirkung sehr stark temperaturabhängig aufgrund des Viskositätsverhaltens des eingesetzten Kühl- und Schmieröls. Demzufolge gibt es insbesondere beim Anfahren der Einrichtung und bei kaltem Öl erhebliche Probleme im Schaltverhalten (Kleben der vom Öl überschwemmten Lamellen sowie Stillstandspositionen beim Bremsen schwankend) und in der Dichtheit der unter Umständen nur mit einem Labyrinth abgedichteten Schaltelemente. Aufgrund des beim Anlauf erheblich schlechteren Ölablaufs kann es im Extremfall vorkommen, daß der gesamte Ölinhalt des zum Betreiben des Schaltelementes installierten Behälters (hydr. Aggregat) in die Schaltelemente gedrückt wird und dadurch der überwachte Ölspiegel im Behälter zum Abschalten der Maschine führt, noch bevor der Ölrücklauf stattgefunden hat. Als Gegenmaßnahme werden aufwendige Heizsysteme zur Ölerwärmung in Kombination mit großem Behältervolumen vorgesehen.

Das Ziel der Erfindung besteht in der Schaffung eines drehzahl- und temperaturunabhängigen Kühl- und Schmierölablaufes mit den bekannten Schaltelementen, welcher ein von vorgenannten Betriebsstörungen unabhängiges Betreiben der Maschine ermöglicht und welcher den Einsatzbereich der Schaltelemente mit einem rotierenden Kupplungsgehäuse in den Bereich kleiner Drehzahlen erweitert.

Der Erfindung liegt die Aufgabe zugrunde, eine Einrichtung zu schaffen, die sicher den Ölrücklauf aus einem Schaltelement organisiert und damit den Einsatzbereich des Schaltelementes sowie die Betriebszuverlässigkeit erhöht.

Diese Aufgabe wird mit den Merkmalen des Anspruchs 1 erfindungsgemäß gelöst.

Eine zweckmäßige Form der Realisierung der Erfindung wird nach Skizze näher erläutert.

Das Schwungrad 1 (oder Antriebsrad) ist auf der Hohlachse 12 gelagert und treibt über das ständig umlaufende Kupplungsgehäuse 2 den Kupplungsteil der Kupplungs-Bremskombination 9.

Der Bremsteil von 9 ist verdrehfest über das Bremsgehäuse 4 und der Hohlachse 12 fixiert. Zum Einschalten (Einkuppeln) gelangt Drucköl über den Schaltölanschluß 7 durch die Abtriebswelle 6 in 9; das Ausschalten (Abbremsen) erfolgt mit Federkraft der Bremse beim Abschalten des Drucköls. Der Kühlölumfluß 8 erfolgt ebenfalls über Bohrungen in der Abtriebswelle 6; das Öl sorgt für eine ständige Kühlung und Schmierung der Schaltelemente und läuft aus der Kupplungs-Bremskombination 9 an den Rand des umlaufenden Kupplungsgehäuses 2. Am Bremsgehäuse 4 befestigt bzw. nur als Pumpenläufer im Bremsgehäuse 4 eingesetzt ist eine Ölpumpe 10 (z.B. eine Flügelzellenpumpe).Mit 5 ist eine Ölrücklauf-Leitung bezeichnet. Der Pumpenantrieb erfolgt ständig durch das vom Zahnkranz 3 getriebene Ritzel 11. Durch die Wahl des Übersetzungsverhältnisses zwischen 3 und 11 erfolgt eine optimale Anpassung der Fördermenge der Pumpe 10 an die abzutransportierende Ölmenge. So bleibt das Umlaufverhalten des Öles vom Hydraulikaggregat zum Schaltelement an der Maschine und zurück ein konstantes, weil es durch die Pumpe 10 gewährleistet ist.

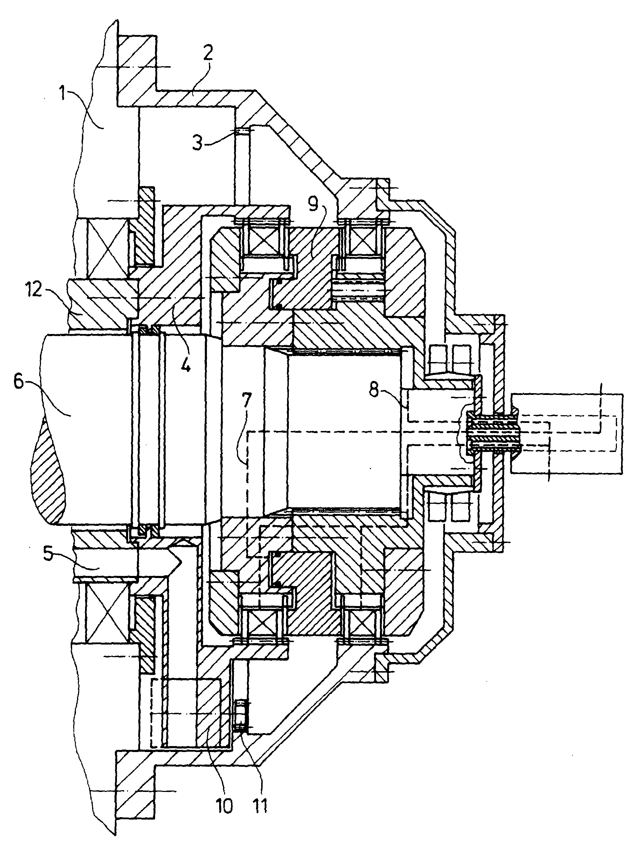

## Patentansprüche

1. Einrichtung an einer mit Kühl- und Schmieröl betriebenen naßlaufenden Kupplungs- und Bremsvorrichtung mit einem Kupplungs- und einem Bremsteil als Schaltelemente einer Maschine der Umformtechnik mit einem Umlaufverhalten des Öls von einem Hydraulikaggregat zu den Schaltelementen an der Umformmaschine und zurück zum Hydraulikaggregat,
wobei der Kupplungsteil mittels eines ständig umlaufenden Kupplungsgehäuses angetrieben wird,
**dadurch gekennzeichnet,**
**daß** eine Pumpe (10) vorhanden ist, die über ein Ritzel (11) von einem innerhalb des rotierenden Kupplungsgehäuses (2) angeordneten Zahnkranz (3) angetrieben ist,
**daß** die Pumpe (10) den Ölrücklauf des aus den Schaltelementen herausgelaufenen Öls zu dem Hydraulikaggregat organisiert,
wobei die Ölpumpe (10) unten am oder unten im Bremsgehäuse (4), über das der Bremsteil verdrehfest fixiert ist, angeordnet ist.

## Claims

1. Equipment at a wet-running coupling and braking device, which is operated by cooling and lubricating oil, with a coupling part and a braking part as switching elements of a deforming technology machine with a circulation behaviour of the oil from a hydraulic unit to the switching elements at the deforming machine and back to the hydraulic unit, wherein the coupling part is driven by means of a constantly rotating coupling housing, **characterised in that** a pump (10) is present, which is driven by way of a pinion (11) from a crown gear (3) arranged within the rotating coupling housing (2), and that the pump (10) organises the return to the hydraulic unit of the oil running out of the switching elements, wherein the oil pump (10) is arranged at the bottom at or bottom in the brake housing (4), by way of which the brake part is fixed to be secure against rotation.

## Revendications

1. Dispositif sur un dispositif d'accouplement et de freinage de type humide actionné par de l'huile de refroidissement et de lubrification, présentant une pièce d'accouplement et une pièce de freinage comme éléments de commutation d'une machine provenant de la technique de formage avec un comportement de circulation de l'huile d'un agrégat hydraulique vers les éléments de commutation sur la machine de formage et retour vers l'agrégat hydraulique,
la pièce d'accouplement étant entraînée par un carter d'accouplement tournant en continu,
**caractérisé**
**en ce qu'**une pompe (10) est présente, qui est entraînée via un pignon (11) par une roue dentée (3) disposée à l'intérieur du carter d'accouplement ((2) en rotation,
**en ce que** la pompe (10) organise le retour d'huile de l'huile sortant des éléments de commutation vers l'agrégat hydraulique,
la pompe à huile (10) étant disposée au-dessous ou dans le bas du carter de frein (4), via lequel la pièce de freinage est fixée de manière à ne pas pouvoir tourner.
